Europäisches Patentamt

European Patent Office

Office européen des brevets

(11) Numéro de publication : **0 462 910 A1**

# (12) DEMANDE DE BREVET EUROPEEN

(21) Numéro de dépôt : **91420203.1**

(51) Int. Cl.⁵ : **B65G 47/14**

(22) Date de dépôt : **20.06.91**

(30) Priorité : **21.06.90 FR 9008049**

(43) Date de publication de la demande :
**27.12.91 Bulletin 91/52**

(84) Etats contractants désignés :
**AT BE CH DE ES FR GB IT LI NL SE**

(71) Demandeur : **S.P.C. CONCEPTION S.A.R.L.**
**Les Verrières-De-Joux**
**F-25300 Pontarlier (FR)**

(72) Inventeur : **Vallet, Serge**
**Les Verrières-De-Joux**
**F-25300 Pontarlier (FR)**

(74) Mandataire : **Moinas, Michel**
**Cabinet Michel Moinas 13 Chemin du Levant**
**F-01210 Ferney-Voltaire (FR)**

(54) **Dispositif de maintien d'élément de sélection dans une machine trieuse d'objets.**

(57)    Dispositif de maintien d'éléments de sélection (14) dans une machine trieuse d'objets (1) qui comprend un plateau interne tournant (17) agencé de telle sorte qu'il amène les objets (1) les uns derrière les autres sur une couronne concentrique (16) également tournante. Le ou les éléments de sélection (14) sont disposés au-dessus du plateau et/ou de la couronne de façon à trier les objets correctement orientés pour les diriger vers une sortie, les autres objets étant recirculés vers le plateau interne. Le dispositif comprend un cadre circulaire fixe (12) disposé ai-dessus et parallèlement à la couronne (16), cadre auquel est attaché au moins un support (46) d'élément de sélection (14) par des moyens (22,30,40) permettant le réglage de la position de l'élément de sélection (14) dans l'espace.

EP 0 462 910 A1

FIG 1

La présente invention est relative à un dispositif de maintien d'élément de sélection dans une machine trieuse d'objets, et plus particulièrement dans une machine trieuse qui comprend un plateau interne tournant agencé de telle sorte qu'il amène les objets les uns derrière les autres sur une couronne concentrique également tournante. Dans une telle machine, le ou les éléments de sélection sont disposés au-dessus du plateau et/ou de la couronne de façon à trier les objets correctement orientés pour les diriger vers une sortie, les autres objets étant recirculés vers le plateau interne.

De telles machines trieuses connues sont par exemple illustrées dans les exposés FR 2 310 164 et US 3 882 998. Usuellement, les éléments de sélection sous la forme de tôles verticales cylindriques ou en portion de cylindre sont fixés de manière quasi-définitive au-dessus du plateau et couronne tournante en des positions le long de la périphérie également fixées une fois pour toute. En effet, la qualité d'un tri dépend grandement de la précision de la position et de la fermeté du maintien de ces éléments de sélection. Tout-à-fait satisfaisant pour des machines trieuses appelées à ne traiter qu'un seul type d'objet, ce mode de fixation des éléments de sélection se révèle inadapté lorsqu'une même machine est prévue pour trier successivement des séries d'objets différents.

Le but de la présente invention est un mode de fixation d'éléments de sélection dans une machine trieuse permettant d'une part de les disposer en des points quelconques de la périphérie de la couronne tournante et d'autre part de modifier ou d'ajuster aisément et rapidement la disposition dans l'espace de ces éléments tout en leur assurant, comme auparavant, un maintien ferme et précis. Un autre but de l'invention est un dispositif de sélection sur machine trieuse facilement modifiable en fonction de l'objet à traiter.

Ces buts sont atteints grâce à un dispositif de maintien comprenant un cadre circulaire fixe disposé au-dessus et parallèlement à la couronne, cadre auquel est attaché au moins un support d'élément de sélection par des moyens permettant le réglage de la position de cet élément de sélection dans l'espace.

Avantageusement, le cadre circulaire, de largeur supérieure à la couronne tournante, est complété d'une pluralité d'orifices ou lumières verticales traversant et/ou de parties saillantes sous-jacentes permettant l'accrochage individuel ou simultané de ces supports en des points choisis de la périphérie. De plus, ces moyens permettent un réglage aussi bien en hauteur que dans un plan horizontal selon des coordonnées polaires.

Selon un mode de réalisation, les moyens d'accrochage comprennent une pièce intermédiaire enfilée par un orifice interne vertical autour d'un axe également vertical fixé sous le cadre dans un orifice ou à une partie saillante. Cette pièce présente au moins une rainure latérale sensiblement horizontale faisant office de coulisse pour un coulisseau portant en son extrémité le support d'élément de sélection. Le blocage de la pièce contre l'axe peut se faire au moyen d'une vis engagée dans un trou taraudé de la pièce pour venir appuyer contre l'axe. Le blocage du coulisseau contre la rainure peut se faire également au moyen d'une vis traversant le coulisseau par une fente longitudinale puis engagé dans un trou taraudé de la pièce. L'emploi de ces vis est avantageux dans la mesure où un quart de tour en arrière suffit pour débloquer la pièce et la réorienter alors que, une fois serrée, le maintien est très ferme.

De préférence, l'orifice interne vertical de la pièce intermédiaire est décentré par rapport à son axe vertical médian. Ainsi, cette pièce intermédiaire est soit proche, soit éloignée du plateau interne donnant ainsi au coulisseau du support une double plage de débattement.

Utilement, la pièce intermédiaire présente sur l'une de ses faces latérales deux rainures horizontales superposées jour le maintien simultané de deux coulisseaux avec leur support d'élément respectif. Une même pièce intermédiaire peut ainsi être appelée à supporter deux éléments de sélection qu'ils soient écartés ou appliqués l'un contre l'autre.

Lorsque l'élément de sélection se présente sous la forme d'une tôle verticale, alors le support est avantageusement une fourche à branches orientée vers le bas dont l'une des branches présente au moins un orifice taraudé pour une vis de fixation de la tôle dans la fourche.

Comme on peut facilement le comprendre, le dispositif de maintien selon l'invention est tout particulièrement intéressant dans la mesure où le dispositif de sélection est composé d'une pluralité de tôles verticales en forme de portion de cylindre d'angle au sommet compris entre 20° et 90°. Cette pluralité de tôles peut être combinée pour créer, au-dessus de la couronne externe tournante, un chemin sélectif pour les objets et ce par rapport au bord de la couronne proche du plateau interne tournant.

L'invention est décrite ci-après de façon plus détaillée à l'aide d'exemples d'exécution sans caractère limitatif et illustrés aux dessins annexés dans lesquels :

    – la figure 1 est une vue schématique en perspective partielle et éclatée du dispositif de maintien selon l'invention, et
    – la figure 2 est une vue schématique en perspective éclatée d'une alternative de pièces.

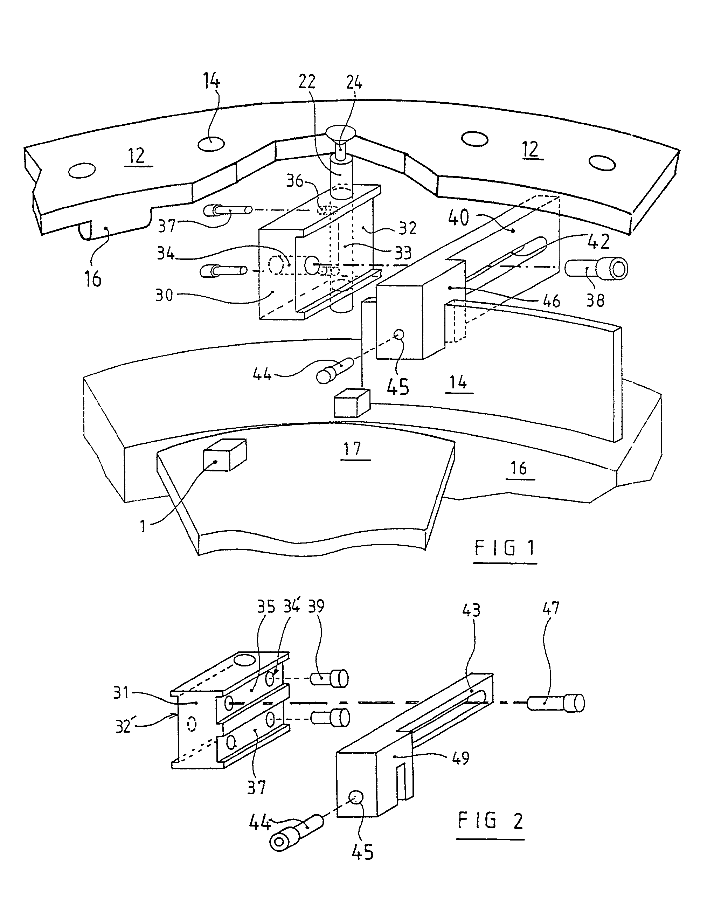

Sur la figure 1 est illustrée une portion de disque interne inférieur tournant 17 amenant des objets 1 sur une couronne supérieure concentrique de transport 16. Au-dessus de cette couronne 16 sont disposées plusieurs tôles ou autres pièces rigides ou souples de sélection 14 de telle sorte que tous les objets 1 mal orientés soient repositionnés ou rejetés vers le plateau interne inférieur 17, seuls les objets correctement orientés étant amenés par la couronne jusqu'à une sortie de dégagement.

Le dispositif de maintien en place de la tôle de sélection 14 comprend d'abord un cadre circulaire, ou couronne, de support 12 illustré partiellement et fixé au cadre général de la machine trieuse de manière à surplomber la couronne de transport tournante sous-jacente 16. Ce cadre circulaire a une largeur supérieure à cette couronne 16 et une épaisseur suffisante déterminée de manière à assurer une rigidité mécanique satisfaisante pour un poids d'éléments de sélection par unité de surface maximum calculé de telle sorte à couvrir toutes les applications envisageables. Ce cadre circulaire présente une pluralité d'orifices circulaires ou lumières oblongues 14 verticales traversant ce cadre de part en part. Cette pluralité d'orifices peut être disposée le long d'une ligne médiane ou constituer un maillage. Ce cadre peut également être muni de tenons ou autre parties saillantes le long de ses bords inférieurs internes et externes.

De par la structure et la disposition de ce cadre circulaire, on peut d'abord lui accrocher directement en n'importe quel endroit précis un ou des dispositifs de sélection spécialement élaborés pour un travail donné. Par ailleurs, plusieurs axes verticaux 22, par exemple seize régulièrement répartis, sont accrochés sous la couronne de support 12 au moyen de vis 24 passant au travers d'un orifice 14, ou au moyen de crochets, non représentés, venant saisir une partie saillante 16.

Le dispositif de maintien utilisant les axes verticaux 22 comprend de plus une pièce intermédiaire 30 présentant un orifice cylindrique vertical 33 permettant de l'enfiler autour d'un axe vertical 22. Cette pièce présente de plus deux trous taraudés 36 superposés intersectant chacun l'orifice cylindrique 33. On peut ainsi engager dans les trous taraudés 36 des vis 37 que l'on peut amener, en tournant, à buter contre l'axe vertical 22 pour bloquer la position de la pièce intermédiaire 30 par rapport à cet axe.

Cette pièce intermédiaire 30 présente également sur sa face latérale droite, tel qu'illustré sur la figure 1, une rainure 32 faisant office de coulisse pour une seconde pièce sous la forme d'un coulisseau 40 que termine une fourche 46 orientée vers le bas. Le coulisseau 40 présente une fente longitudinale 42 alors que la pièce intermédiaire présente, en correspondance, un troisième orifice taraudé 34. Ainsi, grâce à une vis 38 traversant d'abord la fente 42 avant d'être engagée dans l'orifice 34, il est possible de serrer à volonté le coulisseau 40 dans la rainure 32 de la pièce intermédiaire 30. Au besoin, cette vis 38 est desserrée juste suffisamment pour permettre de faire glisser le coulisseau 40 dans la rainure 32 pour ajuster plus ou moins l'avancement de la fourche 46.

La fourche 46 constitue, dans l'exemple de réalisation illustré sur la figure 1, le support de l'élément de sélection : en l'occurrence une tôle verticale arquée 14. Une vis 44 engagée dans la branche en avant permet de coincer cette tôle dans la fourche 46. Bien évidemment, d'autres formes de support peuvent être envisagées: simples bras terminés par une vis ou crochets selon la forme de l'élément de sélection retenue.

Sur la figure 2 est illustrée une pièce intermédiaire 31 plus complète. En effet, la face latérale gauche est constituée d'une rainure 32' couvrant la totalité de la face de manière analogue à la rainure 32 citée précédemment. La face latérale droite présente elle une double rainure : une supérieure 35 et une inférieure 37 de hauteur égale à environ la moitié de celle de la rainure 32 citée précédemment. A ces rainures sont associés des coulisseaux 43 moins hauts mais présentant toujours une fente longitudinale. Comme on peut aisément le comprendre, deux fourches 49 peuvent ainsi être simultanément positionnées l'une plus avant que l'autre, puis bloquées en position au moyen de vis 47 passant par les fentes longitudinales des coulisseaux 43 avant d'être engagées dans les orifices en correspondance 34'. Comme précédemment, des vis 39 permettent de bloquer en position la pièce intermédiaire 31 autour de l'axe vertical 22.

L'assemblage des pièces lors de leur utilisation découle logiquement de leur configuration. Il est à remarquer que la pluralité d'orifices 14 ou de tenons 16 permet un premier choix approximatif de la position future de l'élément de selection. La pièce 30 enfilée autour de l'axe 22 permet ensuite le réglage simultanément en hauteur et en rotation dans un plan horizontal. Le réglage du coulisseau 40 par rapport à la pièce 30 permet la modification de la distance radiale entre le support 46 et cet axe vertical 22, constituant ainsi la deuxième donnée des coordonnées polaires dans le plan horizontal.

Il convient également de remarquer que la pièce intermédiaire 30 peut prendre quatre positions différentes : orifice cylindrique 33 sur l'arrière avec la rainure 32 sur la droite ou, après rotation de 180° : orifice cylindrique 33 vers l'avant et rainure 32 sur la gauche ; après rotation autour de l'axe longitudinal médian : orifice cylindrique 33 vers l'arrière mais cette fois-ci la rainure 32 sur le côté latéral gauche ou, après rotation de 180° autour de l'axe vertical 22 : orifice cylindrique 33 en avant et rainure 32 sur la droite. Combiné avec la plage de déplacement autorisée par le coulisseau 40 (ou 43), ce dispositif permet ainsi de couvrir une grande partie du plateau interne, toute la largeur de la couronne de transport 16 ainsi qu'une importante zone à l'extérieur de la couronne.

Grâce à ce dispositif de maintien d'élément de sélection, il est possible d'agencer plusieurs éléments de sélection les uns par rapport aux autres, notamment des tôles arquées d'angle au sommet d'environ 45° (donc faisant 1/8 ème de tour), pour former aisément un chemin avec de nombreuses chicanes permettant d'effectuer des tris efficaces sur des pièces complexes. De nombreuses améliorations peuvent être apportées à ce dispositif dans le cadre de l'invention.

**Revendications**

1. Dispositif de maintien d'éléments de sélection (14) dans une machine trieuse d'objets (1), laquelle machine comprend un plateau interne tournant (17) agencé de telle sorte qu'il amène les objets (1) les uns derrière les autres sur une couronne concentrique (16) également tournante, lequel élément de sélection (14) est disposé au-dessus du plateau et/ou de la couronne de façon à trier les objets pour les diriger correctement orientés vers une sortie, les autres objets étant recirculés vers le plateau interne, caractérisé en ce que le dispositif comprend un cadre circulaire fixe (12) disposé au-dessus et parallèlement à la couronne (16), cadre auquel est attaché, en un point choisi, au moins un support (46) d'élément de sélection (14) par des moyens (22,30,40) permettant le réglage de la position de l'élément de selection (14) dans l'espace.

2. Dispositif selon la revendication 1, caractérisé en ce que le cadre circulaire présente une pluralité d'orifices verticaux traversant (14) et/ou de parties saillantes sous-jacentes (16).

3. Dispositif selon la revendication 1 ou 2, caractérisé en ce que les moyens (22,30,40) permettent un réglage de la position de l'élément de sélection (14) en hauteur et dans un plan horizontal selon des coordonnées polaires.

4. Dispositif selon la revendication 3, caractérisé en ce que les moyens comprennent une pièce intermédiaire (30) enfilée par un orifice interne vertical (33) autour d'un axe également vertical (22) fixé sous le cadre (12), laquelle pièce (30) présente au moins une rainure latérale sensiblement horizontale (32) faisant office de coulisse pour un coulisseau (42) portant en son extrémité le support (46) d'élément, ainsi que des moyens de blocage de la pièce (30) contre l'axe (22) et du coulisseau (42) contre la rainure (32).

5. Dispositif selon la revendication 4, caractérisé en ce que le blocage en position du dispositif se fait d'une part au moyen d'une vis (37) engagée dans un trou taraudé (36) de la pièce (30) pour venir appuyer contre l'axe (22) et d'autre part au moyen d'une vis (38) traversant le coulisseau par une fente (42) longitudinale puis engagée dans un trou taraudé (34) de la pièce (30).

6. Dispositif selon la revendication 4, caractérisé en ce que l'orifice interne vertical (33) est décentré par rapport à l'axe vertical médian.

7. Dispositif selon la revendication 4, caractérisé en ce que la pièce intermédiaire (31) présente sur l'une de ses faces latérales deux rainures horizontales superposées (35,37) pour le maintien simultané de deux coulisseaux (43) avec leur support (49) d'élément respectif.

8. Dispositif selon l'une des revendications précédentes appliquée à un élément de sélection en forme de tôle verticale caractérisé en ce que le support (46) est une fourche à deux branches orientée vers le bas dont l'une des branches présente au moins un orifice taraudé (45) pour une vis de fixation (44) de la tôle dans la fourche.

9. Dispositif de sélection composé d'éléments (14) maintenus par un dispositif selon l'une des revendications précédentes dans une machine trieuse d'objets (1) caractérisé en ce que ce dispositif est composé d'une pluralité de tôles verticales (14) en forme de portion de cylindre d'angle au sommet compris entre 20° et 90°.

FIG 1

FIG 2

Office européen
des brevets

# RAPPORT DE RECHERCHE EUROPEENNE

Numero de la demande

EP    91 42 0203

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-2 539 721 (FMC CORPORATION)<br>* page 4, ligne 28 - page 5, ligne 32; figures *<br>--- | 1,3 | B65G47/14 |
| X | PATENT ABSTRACTS OF JAPAN<br>vol. 9, no. 92 (M-373)(1815) 20 Avril 1985<br>& JP-A-59 217 522 (SINKO DENKI ) 7 Décembre 1984 | 1,3 | |
| A | * le document en entier *<br>--- | 4,5,6 | |
| X | FR-A-2 415 061 (ROBERT BOSCH)<br>* le document en entier *<br>----- | 1,3 | |

### DOMAINES TECHNIQUES RECHERCHES (Int. Cl.5)

B65G

Le présent rapport a été établi pour toutes les revendications

| Lieu de la recherche | Date d'achèvement de la recherche | Examinateur |
|---|---|---|
| LA HAYE | 10 SEPTEMBRE 1991 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)